# EUROPÄISCHE PATENTSCHRIFT

(11) **EP 3 230 394 B1**
(45) Veröffentlichungstag und Bekanntmachung des Hinweises auf die Patenterteilung: **06.03.2019**
(21) Anmeldenummer: 16700271.6
(22) Anmeldetag: 11.01.2016
(51) Int. Cl.: C09J 131/04, C08K 3/16, C08K 5/053, C08F 218/08, B32B 21/04, C08F 218/10, C08F 210/02

(54) **WÄSSRIGE POLYMERDISPERSIONEN FÜR ADHÄSIVE**
AQUEOUS POLYMER DISPERSIONS FOR ADHESIVES
DISPERSIONS AQUEUSES DE POLYMÈRE POUR ADHÉSIFS

(30) Priorität: 14.01.2015 DE 102015200498
(43) Veröffentlichungstag der Anmeldung: 18.10.2017
(73) Patentinhaber: Wacker Chemie AG, 81737 München (DE)
(72) Erfinder: SCHRÖGEL, Pamela, 84561 Mehring (DE); BAUERS, Florian, 84489 Burghausen (DE); PANKOW, Oliver, 84367 Tann (DE)
(74) Vertreter: Ege, Markus
(86) Internationale Anmeldenummer: PCT/EP2016/050357
(87) Internationale Veröffentlichungsnummer: WO 2016/113211

(56) Entgegenhaltungen:
- WO-A1-2013/057214
- DE-A1- 3 134 334

## Beschreibung

Die vorliegende Erfindung betrifft wässrige Dispersionen auf Basis Schutzkolloid stabilisierter Polymerisate von ethylenisch ungesättigten Monomeren sowie entsprechende in Wasser redispergierbare Polymerpulver, Verfahren zu deren Herstellung sowie deren Verwendung beispielsweise in Beschichtungs- oder Klebemitteln, insbesondere als Additiv für Holzleim oder Papierklebstoffe oder als Klebstoff für sonstige Verpackungsmaterialien.

Als Beschichtungsmittel oder Klebemittel werden vielfach Polyvinylalkohol-stabilisierte Emulsionspolymerisate eingesetzt. So beschreibt die GB 2089355 Papierklebstoffe auf Basis von Polyvinylacetat. Die EP 2138548 und WO 2013/057214 lehren wässrige, mit vollverseiften Polyvinylalkoholen stabilisierte Polymerdispersionen mit reduziertem Formaldehydgehalt sowie deren Einsatz in Adhäsiven, beispielsweise zum Verkleben von Holz, Papier oder Verpackungsmaterialien. Die EP 1777241 befasst sich mit Polymerdispersionen als Bindemittel bzw. Klebemittel, beispielsweise für Non-wovens, Holz oder Papier, und weist zur Verbesserung der Nassfestigkeit der Produkte vom Einsatz von Schutzkolloid-stabilisierten Polymeren weg. Die WO 2013/123188 empfiehlt zur Verbesserung der Viskositätsstabilität von Adhäsiven den Zusatz von speziellen Weichmachern. Der DE 10054162 sind vernetzbare Bindemittel zur Herstellung von Holzpressplatten entnehmbar. Die EP 1493793 lehrt wässrige Polymerdispersionen für Klebstoffzusammensetzungen mit verbesserten rheologischen Eigenschaften und verbesserter Wasserbeständigkeit nach Applikation. Die DE 3134334 beschreibt wässrige Klebstoffe auf Basis von wässrigen Polymerdispersionen, Salzen von (Erd)Alkali-Metallen und gegebenenfalls Netzmitteln, beispielsweise Alkohole, sowie gegebenenfalls wasserlöslichen Schutzkolloiden, wie teilverseifte Polyvinylalkohole.

Nachteiligerweise neigen herkömmliche Schutzkolloid stabilisierte Polymerdispersionen zum Viskositätsaufbau während der Lagerung und sind somit nicht hinreichend lagerstabil. Dieses Problem tritt in besonderem Maße bei Einsatz von vollverseiften Polyvinylalkoholen als Schutzkolloid auf. Zur Steigerung der Lagerstabilität von wässrigen Polymerdispersionen beziehungsweise der mit ihnen formulierten wässerigen Klebstoffe wurde bisher der Zusatz von Harnstoff empfohlen. Harnstoff erweist sich aber als schädlich für die Wasserfestigkeit entsprechender Applikationsprodukte, wie Klebeverbunden, und kann die Rheologieeigenschaften, wie Viskositäten, der Polymerdispersionen bzw. der Klebstoffe negativ beeinflussen. Auch etwaige Zusätze von Aluminiumsalzen, wie Aluminiumchlorid, können sich nachteilig auf die Lagerstabilität auswirken, da solche Salze zu einem Eindicken von wässrigen Polymerdispersionen und wässerigen Klebstoffen führen können. Dies kann insbesondere dann der Fall sein, wenn die Polymerisate vernetzbare Comonomere, wie N-Methylolacrylamid, enthalten.

Vor diesem Hintergrund bestand die Aufgabe, die Lagerstabilität von wässrigen Polymerdispersionen oder die Lagerstabilität von solche Polymerdispersionen enthaltenden Klebstoffformulierungen zu verbessern; d.h. während der Lagerung bei Raumtemperatur oder bei erhöhten Temperaturen, beispielsweise bis 50°C, sollte nach Möglichkeit keine oder keine wesentliche Änderung, vorzugsweise keine signifikante Zunahme der Viskosität auftreten. Diese Aufgabe sollte mit Polymerdispersionen gelöst werden, die vollverseifte Polyvinylalkohole als Schutzkolloid enthalten. Darüber hinaus sollten die Applikationsprodukte nach Möglichkeit eine verbesserte Wasserfestigkeit aufweisen.

Diese Aufgabe wurde überraschenderweise mit Polymerdispersionen gelöst enthaltend ein oder mehrere Salze von (Erd)Alkali-Metallen sowie ein oder mehrere Alkohole, die mindestens eine Alkohol-Gruppe und gegebenenfalls eine oder mehrere weitere funktionelle Gruppen tragen ausgewählt aus der Gruppe umfassend Amin-, Carbaminsäure-, Mercaptan-, Sulfonsäure-, Schwefelsäure-, Halogenid-, Carboxyl-, Alkoxy-, Phosphinsäure-, Phosphonsäure- und Phosphorsäure-Gruppen, wobei die Summe aus der Anzahl der Alkohol-Gruppen und der weiteren funktionellen Gruppen der Alkohole ≥ 2 ist, wobei die Polymerdispersionen als Schutzkolloide ein oder mehrere vollverseifte Polyvinylalkohole mit einem Hydrolysegrad von ≥ 90 Mol-% enthalten.

Die erfindungsgemäßen Alkohole werden im Folgenden auch als di- oder polyfunktionelle Alkohole bezeichnet. Bisher wurden solche Alkohole, insbesondere Alkandiole, vielfach in Kombination mit Isocyanat-Verbindungen zur Bereitstellung von vernetzbaren Zusammensetzungen eingesetzt.

Gegenstand der Erfindung sind wässrige Dispersionen auf Basis Schutzkolloid stabilisierter Polymerisate von ethylenisch ungesättigten Monomeren, dadurch gekennzeichnet, dass ein oder mehrere Salze von (Erd)Alkali-Metallen sowie ein oder mehrere Alkohole enthalten sind, die mindestens eine Alkohol-Gruppe und gegebenenfalls eine oder mehrere weitere funktionelle Gruppen tragen ausgewählt aus der Gruppe umfassend Amin-, Carbaminsäure-, Mercaptan-, Sulfonsäure-, Schwefelsäure-, Halogenid-, Carboxyl-, Alkoxy-, Phosphinsäure-, Phosphonsäure- und Phosphorsäure-Gruppen,
wobei die Summe aus der Anzahl der Alkohol-Gruppen und der weiteren funktionellen Gruppen der Alkohole ≥ 2 ist, und
wobei die Schutzkolloide ein oder mehrere vollverseifte Polyvinylalkohole mit einem Hydrolysegrad von ≥ 90 Mol-% umfassen.

Ein weiterer Gegenstand der Erfindung sind Verfahren zur Herstellung von wässrigen Dispersionen auf Basis Schutzkolloid stabilisierter Polymerisate von ethylenisch ungesättigten Monomeren, dadurch gekennzeichnet, dass
ein oder mehrere Salze von (Erd)Alkali-Metallen sowie ein oder mehrere Alkohole eingesetzt werden, die mindestens eine Alkohol-Gruppe und gegebenenfalls eine oder mehrere weitere funktionelle Gruppen tragen ausgewählt aus der Gruppe umfassend Amin-, Carbaminsäure-, Mercaptan-, Sulfonsäure-, Schwefelsäure-, Halogenid-, Carboxyl-, Alkoxy-, Phosphinsäure-, Phosphonsäure- und Phosphorsäure-Gruppen,
wobei die Summe aus der Anzahl der Alkohol-Gruppen und der weiteren funktionellen Gruppen der Alkohole ≥ 2 ist-und
wobei die Schutzkolloide ein oder mehrere vollverseifte Polyvinylalkohole mit einem Hydrolysegrad von ≥ 90 Mol-% umfassen.

Als (Erd)Alkali-Metalle können alle Alkali- oder Erdalkali-Metalle eingesetzt werden. Bevorzugt sind Alkalimetalle. Die (Erd)Alkali-Metalle liegen in den Salzen im Allgemeinen als Kationen vor. Bevorzugte Erdalkali-Metalle sind Calcium und Magnesium. Bevorzugte Alkali-Metalle sind Lithium, Natrium und Kalium. Am meisten bevorzugt ist Lithium.

Die Salze der (Erd)Alkali-Metalle können im Allgemeinen beliebige Anionen enthalten, wie beispielsweise Carboxylate, Carbonate, Sulfate, Nitrate, Sulfonsäuren, wie Triflate, Hypohalogenide oder Halogenide. Bevorzugt sind hierbei Acetate, Citrate, Sulfate, Triflate oder Halogenide, insbesondere Chloride. Die Anionen sind in den Salzen der (Erd)Alkali-Metalle im Allgemeinen die Gegenionen der (Erd)Alkali-Metalle.

Beispiele für bevorzugte Salze von (Erd)Alkali-Metallen sind Alkali-Halogenide, Alkali-Acetate, Alkali-Triflate und Alkali-Sulfate. Besonders bevorzugt sind Lithiumchlorid, Lithiumacetat, Lithiumcitrat, Lithiumtriflat und Lithiumsulfat. Am meisten bevorzugt ist Lithiumchlorid.

Die Salze der (Erd)Alkali-Metalle haben im Allgemeinen eine Wasserlöslichkeit von ≥ 1 g pro Liter Wasser unter Normalbedingungen (23/50) nach DIN50014.

Bevorzugt enthalten die wässrigen Dispersionen 0,05 bis 3 Gew.-%, besonders bevorzugt 0,07 bis 2 Gew.-% und am meisten bevorzugt 0,1 bis 1 Gew.-% an Salzen von (Erd)Alkali-Metallen, bezogen auf das Gesamtgewicht der Polymerisate auf Basis ethylenisch ungesättigter Monomere.

Die di- oder polyfunktionellen Alkohole enthalten vorzugsweise 2 bis 15, besonders bevorzugt 3 bis 10 und am meisten bevorzugt 4 bis 8 Kohlenstoffatome. Die di- oder polyfunktionellen Alkohole sind vorzugsweise gesättigt und tragen besonders bevorzugt keine ethylenisch ungesättigte Gruppe. Vorzugsweise sind die di- oder polyfunktionellen Alkohole aliphatisch. Vorzugsweise ist die Summe aus der Anzahl der Alkohol-Gruppen und der weiteren funktionellen Gruppen der di- oder polyfunktionellen Alkohole 2 bis 15, besonders bevorzugt 2 bis 10, mehr bevorzugt 2 bis 6 und am meisten bevorzugt 2. Bei den funktionellen Gruppen handelt es sich vorzugsweise ausschließlich um Alkohol-Gruppen. Die di- oder polyfunktionellen Alkohole enthalten vorzugsweise ≥ 2 Alkohol-Gruppen und am meisten bevorzugt zwei Alkohol-Gruppen. Vorzugsweise enthalten di- oder polyfunktionellen Alkohole neben Alkohol-Gruppen keine weitere funktionelle Gruppe.

Beispiele für di- oder polyfunktionellen Alkohole sind Ketosen, Aldosen, Cyclodextrine, Alditole, wie Mannitol, Sorbitol, Thritol, Erithritol oder Arabit, Pentaerythritol, Trimethylolpropan, Triethanolpropan, Glycerin, Hydroxyalkanolamine, wie Ethanolamin, Diethanolamin, Triethanolamin, Tris(hydroxymethyl)-aminomethan, oder Diole, wie Ethylenglykol oder Propylenglykol, oder allgemein Diole, wie Hexandiol, Pentandiol oder Heptandiol. Bevorzugt sind Hexandiol, Propylenglykol, Pentandiol und Heptandiol. Besonders bevorzugt ist 1,6-Hexandiol.

Die di- oder polyfunktionellen Alkohole haben im Allgemeinen eine Wasserlöslichkeit von ≥ 1 g pro Liter Wasser unter Normalbedingungen (23/50) nach DIN50014.

Bevorzugt enthalten die wässrigen Dispersionen 0,1 bis 15 Gew.-%, besonders bevorzugt 1 bis 12,5 Gew.-% und am meisten bevorzugt 4 bis 10 Gew.-% an di- oder polyfunktionellen Alkoholen, bezogen auf das Gesamtgewicht der Polymerisate auf Basis ethylenisch ungesättigter Monomere.

Die wässrigen Dispersionen enthalten vorzugsweise keine signifikanten Mengen an Alkoholen mit nur einer Alkohol-Gruppe aus der Gruppe umfassend Methanol, Ethanol, Propanol, Butanol oder Pentanol. Die wässrigen Dispersionen enthalten solche Alkohole zu vorzugsweise ≤ 700 ppm, besonders bevorzugt ≤ 500 ppm und am meisten bevorzugt ≤ 100 ppm.

Ethylenisch ungesättigte Monomere werden vorzugsweise ausgewählt aus der Gruppe umfassend Vinylester, (Meth)acrylsäureester, Vinylaromaten, Olefine, 1,3-Diene und Vinylhalogenide und gegebenenfalls weitere damit copolymerisierbare Monomere.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Geeignete Monomere aus der Gruppe der Ester der Acrylsäure oder Methacrylsäure sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0,05 bis 10 Gew.-%, besonders bevorzugt 0,1 bis 5 Gew.-%, bezogen auf das Gesamtgewicht des Monomere, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure oder deren Natriumsalz, 2-Acrylamido-2-methyl-propansulfonsäure oder deren Natriumsalz. Weitere Beispiele sind vorvernetzende Comonomere wie mehrfach ethylenisch ungesättigte Comonomere, beispielsweise Divinyladipat, Diallylmaleat, Allylmethacrylat, Di(meth)acrylate, Tri(meth)acrylate, Triallylisocyanurat oder Triallylcyanurat, und/oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-(Isobutoxymethyl)acrylamid (IBMA), N-(Isobutoxymethyl)methacrylamid (IBMMA), N-(n-Butoxymethyl)-acrylamid (NBMA) oder N-(n-Butoxymethyl)methacrylamid (NBMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäure(mono oder poly)hydroxyalkylester wie Hydroxyethyl-, Hydroxypropyl-, Glycidylmono- oder Hydroxybutylacrylat oder -methacrylat sowie Verbindungen wie Diacetonacrylamid und Acetylacetoxyethylacrylat oder -methacrylat.

Bevorzugte Hilfsmonomere sind vorvernetzende Comonomere oder nachvernetzende Comonomere. Mit solchen Monomeren können die Kohäsions-Eigenschaften bei der Applikation der wässrigen Dispersionen verbessert werden.

Bevorzugte Polymerisate werden ausgewählt aus der Gruppe umfassend Vinylester-Homopolymerisate, Vinylester-Mischpolymerisate enthaltend eine oder mehrere Vinylester-Einheiten und ein oder mehrere Monomereinheiten aus der Gruppe umfassend Olefine, Vinylaromaten, Vinylhalogenide, Acrylsäureester, Methacrylsäureester, Fumar- und/oder Maleinsäuremono- oder -diester oder siliciumfunktionelle Comonomere; (Meth)acrylsäureester-Homopolymerisate oder (Meth)acrylsäureester-Mischpolymerisate enthaltend eine oder mehrere (Meth)acrylsäureester-Einheiten und eine oder mehrere Monomereinheiten aus der Gruppe umfassend Olefine, Vinylaromaten, Vinylhalogenide, Fumar- und/oder Maleinsäuremono- oder -diester oder siliciumfunktionelle Comonomere; Homo- oder Mischpolymerisate von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert sein können; Homo- oder Mischpolymerisate von Vinylaromaten, wie Styrol, Methylstyrol, Vinyltoluol; Homo- oder Mischpolymerisate von Vinylhalogenverbindungen wie Vinylchlorid enthaltend eine oder mehrere Monomereinheiten aus der Gruppe umfassend Vinylester, Olefine und Methacrylsäureester, Acrylsäureester, wobei die Polymerisate noch Hilfsmonomere, vorzugsweise in den oben genannten Mengen, enthalten können.

Beispiele für bevorzugte Vinylester-Mischpolymerisate basieren auf 30 bis 90 Gew.-% an einem oder mehreren Vinylestern, 1 bis 40 Gew.-% Ethylen und gegebenenfalls 1 bis 40 Gew.-% an einem oder mehreren weiteren Comonomeren, bezogen auf das Gesamtgewicht der Monomere. Bei den weiteren Comonomeren handelt es sich vorzugsweise um die vorgenannten, von Vinylestern und Ethylen verschiedenen Monomere.

Bevorzugt werden auch Mischpolymerisate von Vinylacetat mit 1 bis 40 Gew.-% Ethylen; sowie Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; sowie Mischpolymerisate mit Vinylacetat, 1 bis 40 Gew.-% Ethylen und 1 bis 60 Gew.-% Vinylchlorid; wobei die Mischpolymerisate noch die genannten Hilfsmonomere in den genannten Mengen enthalten können, und sich die Angaben in Gew.-% auf jeweils 100 Gew.-% aufaddieren.

Bevorzugte Mischpolymerisate enthalten des Weiteren auch vorvernetzende Comonomere und insbesondere nachvernetzende Comonomere.

Die Schutzkolloid-stabilisierten Polymerisate haben mittlere Partikeldurchmesser Dw von vorzugsweise 100 nm bis 10 µm, besonders bevorzugt 200 nm bis 5 µm und am meisten bevorzugt 500 nm bis 3,5 µm (bestimmt mit dem Messgerät Beckmann Coulter® LS nach ISO 13320).

Die Monomerauswahl bzw. die Auswahl der Gewichtsanteile der Comonomere erfolgt dabei so, dass im Allgemeinen eine Glasübergangstemperatur Tg von -30°C bis +40°C, vorzugsweise -25°C bis +30°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x_{1/}Tg₁ + x_{2/}Tg₂ + ... + x_{n/}Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate erfolgt im Allgemeinen nach dem Emulsionspolymerisationsverfahren. Die Emulsionspolymerisation erfolgt üblicherweise in wässrigem Medium. Die Polymerisationstemperatur beträgt im Allgemeinen 40°C bis 100°C, vorzugsweise 60°C bis 95°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation kann mit den für die Emulsionspolymerisation gebräuchlichen Redox-Initiator-Kombinationen erfolgen. Der Monomerumsatz kann wie üblich mit der Initiatordosierung gesteuert werden. Die Initiatoren werden im Allgemeinen insgesamt so zudosiert, dass eine kontinuierliche Polymerisation gewährleistet ist. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxo-pivalat, Cumolhydroperoxid, Azobisisobutyronitril. Bevorzugt werden die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der Monomere, eingesetzt.

Geeignete Reduktionsmittel sind beispielsweise die Sulfite und Bisulfite der Alkalimetalle und von Ammonium, wie Natriumsulfit, die Derivate der Sulfoxylsäure wie Zink- oder Alkaliformaldehydsulfoxylate, beispielsweise Natriumhydroxymethansulfinat (Brüggolit), Weinsäure und (Iso-)Ascorbinsäure. Bevorzugt werden Natriumhydroxymethansulfinat, Weinsäure und (Iso-)Ascorbinsäure. Die Reduktionsmittelmenge beträgt vorzugsweise 0,015 bis 3 Gew.-%, bezogen auf das Gesamtgewicht der Monomere.

Die genannten Oxidationsmittel, insbesondere die Salze der Peroxodischwefelsäure sowie Wasserstoffperoxid, können auch alleinig als thermische Initiatoren eingesetzt werden.

Zur Steuerung des Molekulargewichts können während der Emulsionspolymerisationsverfahren regelnde Substanzen eingesetzt werden. Falls Regler eingesetzt werden, werden diese üblicherweise in Mengen zwischen 0,001 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäuren oder deren Alkalisalze, Mercaptopropions-äuremethylester, Isopropanol, Phosphonsäure oder deren Derivate, Phosphinsäure oder deren Derivate und Acetaldehyd. Vorzugsweise wird 2-Mercaptopropionsäure oder tert.-Dodecylmercaptan verwendet. Durch Einsatz von Reglern kann die erfindungsgemäße Aufgabe noch besser gelöst werden.

Zur Stabilisierung werden Schutzkolloide, gegebenenfalls in Kombination mit Emulgatoren, eingesetzt. Die so erhältlichen Polymerisate liegen in Form von Schutzkolloid stabilisierten, wässrigen Dispersionen vor.

Zur Stabilisierung gebräuchliche Schutzkolloide sind beispielsweise teilverseifte oder vollverseifte Polyvinylalkohole; Polyvinylpyrrolidone; Polyvinylacetale; Polysaccharide in wasserlöslicher Form wie Stärken (Amylose und Amylopectin), Cellulosen oder deren Derivate, wie Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)-acrylaten mit carboxylfunktionellen Comonomereinheiten, Poly-(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Die Schutzkolloide sind im Handel erhältlich und mittels dem Fachmann bekannter Verfahren zugänglich.

Die Schutzkolloide umfassen vollverseifte Polyvinylalkohole. Bevorzugt werden neben Polyvinylalkoholen keine weiteren Schutzkolloide eingesetzt.

Vollverseifte Polyvinylalkohole haben einen Hydrolysegrad von ≥ 90 Mol-%, vorzugsweise ≥ 95 Mol-%, besonders bevorzugt ≥ 96 Mol-% und am meisten bevorzugt ≥ 98 Mol-%. Es können ein oder mehrere vollverseifte Polyvinylalkohole eingesetzt werden. Bevorzugt enthalten die wässrigen Dispersionen 20 bis 100 Gew.-% und besonders bevorzugt 40 bis 100 Gew.-% an vollverseiften Polyvinylalkohole, je bezogen auf das Gesamtgewicht der Schutzkolloide, insbesondere bezogen auf das Gesamtgewicht der Polyvinylalkohole. Besonders bevorzugt werden als Polyvinylalkohole ausschließlich vollverseifte Polyvinylalkohole eingesetzt.

Gegebenenfalls können zusätzlich ein oder mehrere teilverseifte Polyvinylalkohole eingesetzt werden. Teilverseifte Polyvinylalkohole haben einen Hydrolysegrad von vorzugweise < 90 Mol-%, besonders bevorzugt 80 bis < 90 Mol-% und am meisten bevorzugt von 85 bis 90 Mol-%. Bevorzugt enthalten die wässrigen Dispersionen 0 bis 50 Gew.-%, mehr bevorzugt 0 bis 20 Gew.-% und besonders bevorzugt 0 bis 10 Gew.-% an teilverseiften Polyvinylalkoholen, je bezogen auf das Gesamtgewicht der Schutzkolloide, insbesondere bezogen auf das Gesamtgewicht der Polyvinylalkohole. Am meisten bevorzugt enthalten die wässrigen Dispersionen keine teilverseiften Polyvinylalkohole.

Die Höpplerviskosität der Polyvinylalkohole beträgt vorzugsweise 1 bis 60 mPas, besonders bevorzugt 1,5 bis 40 mPas und am meisten bevorzugt 2 bis 30 mPas (Bestimmung nach DIN 53015, Methode nach Höppler, bei 20°C, 4 %-ige wässrige Lösung).

Bei den Polyvinylalkoholen kann es sich beispielsweise um unmodifizierte Polyvinylalkohole oder um hydrophob modifizierte Polyvinylalkohole handeln. Unmodifizierte Polyvinylalkohole sind bekanntermaßen teil- oder vollverseifte Polymerisate von Vinylacetat-Homopolymeren.

Beispiele für hydrophob modifizierte Polyvinylalkohole sind teil- oder vollverseifte Copolymerisate von Vinylacetat mit hydrophoben Comonomeren, wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate, wie Diisopropylmaleinat und Diisopropylfumarat, Vinylchlorid, Vinylalkylether, wie Vinylbutylether, Olefine, wie Ethen und Decen. Bevorzugte hydrophobe Comonomere sind hierbei Ethen und Isopropenylacetat.

Der Anteil der hydrophoben Einheiten beträgt vorzugsweise 0,1 bis 30 Gew.-%, besonders bevorzugt 1 bis 25 Gew.-%, bezogen auf das Gesamtgewicht eines hydrophob modifizierten Polyvinylalkohols.

Bevorzugt sind auch hydrophob modifizierte Polyvinylalkohole, die durch polymeranaloge Umsetzung, beispielsweise Acetalisierung der Vinylalkoholeinheiten mit C1- bis C4-Aldehyden wie Butyraldehyd erhalten werden.

Bevorzugt werden als Polyvinylalkohole ausschließlich unmodifizierte Polyvinylalkohole oder ausschließlich hydrophob modifizierte Polyvinylalkohole eingesetzt. Bevorzugt werden auch ein oder mehrere unmodifizierte Polyvinylalkohole und zusätzlich ein oder mehrere hydrophob modifizierte Polyvinylalkohole eingesetzt.

Die wässrigen Dispersionen enthalten die Schutzkolloide im Allgemeinen in einer Menge von insgesamt 1 bis 20 Gew.-%, bezogen auf das Gesamtgewicht der Polymerisate.

Im Emulsionspolymerisationsverfahren kann auch in Gegenwart von Emulgatoren polymerisiert werden. Bevorzugte Mengen an Emulgatoren sind 1 bis 7 Gew.-%, bezogen auf das Gesamtgewicht der Monomere. Besonders bevorzugt wird in Abwesenheit von Emulgatoren polymerisiert. Beispiele für Emulgatoren sind anionische, kationische oder nichtionische Emulgatoren, wie anionische Tenside, insbesondere Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die wässrigen Dispersionen enthalten vorzugsweise keine Emulgatoren.

Die Salze der (Erd)Alkali-Metalle können ganz oder teilweise vor, während oder nach der Polymerisation zugegeben werden. Die di- oder polyfunktionellen Alkohole können ganz oder teilweise vor, während oder vorzugsweise nach der Polymerisation zugegeben werden. Durch Zugabe der di- oder polyfunktionellen Alkohole nach der Polymerisation können die Anwendungseigenschaften der wässrigen Dispersionen verbessert werden.

Die Monomere können insgesamt vorgelegt oder zudosiert werden. Es werden vorzugsweise 0 bis 100 Gew.-%, besonders bevorzugt 2 bis 50 Gew.-%, noch mehr bevorzugt 3 bis 30 Gew.-% und am meisten bevorzugt 3 bis 20 Gew.-% der Monomere vorgelegt, bezogen auf das Gesamtgewicht der Monomere, und die verbleibende Restmenge an Monomeren wird zu einem späteren Zeitpunkt während der Emulsionspolymerisation zudosiert. Die Dosierungen können separat (räumlich und zeitlich) durchgeführt werden, oder die zu dosierenden Komponenten können alle oder teilweise voremulgiert dosiert werden.

Die Schutzkolloide können ganz oder teilweise zudosiert, ganz oder teilweise vorgelegt werden. Bevorzugt werden die Schutzkolloide vollständig vorgelegt, oder teilweise vorgelegt und der verbleibende Teil zudosiert, insbesondere in Form einer Stoßdosierung. Eine Stoßdosierung dauert vorzugsweise ≤ 3%, besonders bevorzugt 0,5 bis 2% der gesamten Dauer der Emulsionspolymerisation. Die Dauer der Emulsionspolymerisation bemisst sich beginnend mit der Initiierung der Emulsionspolymerisation bis zu dem Zeitpunkt, zu dem der Umsatz der insgesamt eingesetzten ethylenisch ungesättigten Monomere vorzugsweise ≥ 85 Gew.-% oder gleich 85 Gew.-%, besonders bevorzugt ≥ 90 Gew.-% oder gleich 90 Gew.-% und am meisten bevorzugt ≥ 95 Gew.-% oder gleich 95 Gew.-% beträgt. Es können ein oder mehrere Stoßdosierungen durchgeführt werden. Vorzugsweise werden 1 bis 6, besonders bevorzugt 1 bis 3 und am meisten bevorzugt wird eine Stoßdosierung von Schutzkolloiden durchgeführt.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die erfindungsgemäßen wässrigen Dispersionen haben einen Feststoffgehalt von vorzugsweise 30 bis 75 Gew.-%, besonders bevorzugt von 45 bis 60 Gew.-%.
Die erfindungsgemäßen wässrigen Dispersionen enthalten vorzugsweise 30 bis 75 Gew.-%, besonders bevorzugt 40 bis 65 Gew.-% und am meisten besonders bevorzugt 45 bis 60 Gew.-% an Schutzkolloid stabilisierten Polymerisaten.

Die erfindungsgemäßen wässrigen Dispersionen haben bei einem Feststoffgehalt von 50% Brookfield-Viskositäten von vorzugsweise 1000 bis 40000 mPas, besonders bevorzugt 2500 bis 35000 mPas und am meisten bevorzugt 3000 bis 33000 mPas (Brookfield-Viskosität bei 20 Umdrehungen und 23°C).

Als lagerstabil werden wässrige Dispersionen im Allgemeinen dann bezeichnet, wenn sich deren Viskosität während der Lagerung nicht bzw. nicht wesentlich ändert (Viskositätsstabilität). Die Viskositätsstabilität kann anhand des Quotienten aus der Brookfield-Viskosität einer wässrigen Dispersion am Ende ihrer Lagerung (Bf 20 ng) und der Brookfield-Viskosität zu Beginn der Lagerung (Bf20) beurteilt werden. Die wässrige Dispersion wird hierbei während der Lagerung nicht gerührt. Die Bestimmung der Brookfield-Viskosität erfolgt bei 20 Umdrehungen und 23°C. Der Quotient (Bf20 ng) / (Bf20) ist vorzugsweise ≤ 2, besonders bevorzugt 1 bis 1,6.

Ein weiterer Gegenstand der Erfindung sind Klebstoffformulierungen enthaltend ein oder mehrere erfindungsgemäße wässrige Dispersionen,
0 bis 10 Gew.-Teile, vorzugsweise 1 bis 5 Gew.-Teile an einem oder mehreren Filmbildehilfsmitteln und/oder
0,05 bis 5 Gew.-Teile, vorzugsweise 0,5 bis 4,0 Gew.-Teile, insbesondere 1,5 bis 3,5 Gew.-Teile an einem oder mehreren Katalysatoren und/oder
0 bis 6 Gew.-Teile, bevorzugt 1 bis 4 Gew.-Teile an einem oder mehreren zusätzlichen Schutzkolloiden, insbesondere Polyvinylalkoholen, und/oder
gegebenenfalls 0 bis 10 Gew.-Teile, beispielsweise 2 bis 6 Gew.-Teile Harnstoff,
wobei sich die Angaben in Gew.-Teilen (Gewichtsteilen) auf 100 Gewichtsteile der erfindungsgemäßen wässrigen Dispersionen beziehen.
Die Klebstoffformulierungen können gegebenenfalls ein oder mehrere Füllstoffe enthalten, wie beispielsweise Kalk oder Kreide.

Beispiele für geeignete Filmbildehilfsmittel sind Butylcarbitolacetat (BCA), Propylencarbonat (PC) oder Benzoesäureester. Als Katalysatoren sind saure Katalysatoren bevorzugt, insbesondere saure Metallsalze, wie Aluminium-Salze, beispielsweise Aluminiumsulfat, Aluminiumnitrat oder Aluminiumchlorid, oder Chrom-(III) - oder Zirkon-(IV)-Salze, oder para-Toluolsulfonsäure. Bevorzugt sind Aluminiumchlorid oder Aluminiumnitrat. Vorzugsweise enthalten die wässrigen Dispersionen oder die Klebstoffformulierungen keinen Harnstoff.

Filme der erfindungsgemäßen wässerigen Dispersionen oder der erfindungsgemäßen Klebstoffformulierungen weisen eine Mindestfilmbildungstemperatur (MFT) von vorzugsweise -10 bis 20°C, besonders bevorzugt 0 bis 17,5°C und am meisten bevorzugt 5 bis 15 °C auf. Die Bestimmung der Mindestfilmbildungstemperatur (MFT) erfolgt entsprechend der DIN ISO 2115 mit dem Gerät MFT II 50-030 der Firma Coesfeld. Die MFT-Bank verfügt über einen kalibrierten Temperaturgradienten von 0°C bis 20°C. Die MFT kann mit einer Genauigkeit von +/- 1 K bestimmt werden. Die Messproben können hergestellt werden, indem die Dispersionen wie üblich mittels 200 µm Rakel in Form eines Films auf eine Aluminiumfolie aufgezogen werden, die direkt auf der MFT-Bank appliziert wird. Die Trocknung des Dispersionsfilms erfolgt während 90 Minuten, wobei kontinuierlich ein schwacher trockener Luftstrom über die Probe geleitet wird.

Ein weiterer Gegenstand der Erfindung sind in Wasser redispergierbare Pulver auf Basis Schutzkolloid stabilisierter Polymerisate von ethylenisch ungesättigten Monomeren, dadurch gekennzeichnet, dass
ein oder mehrere Salze von (Erd)Alkali-Metallen sowie ein oder mehrere Alkohole enthalten sind, die mindestens eine Alkohol-Gruppe und gegebenenfalls eine oder mehrere weitere funktionelle Gruppen tragen ausgewählt aus der Gruppe umfassend Amin-, Carbaminsäure-, Mercaptan-, Sulfonsäure-, Schwefelsäure-, Halogenid-, Carboxyl-, Alkoxy-, Phosphinsäure-, Phosphonsäure- und Phosphorsäure-Gruppen,
wobei die Summe aus der Anzahl der Alkohol-Gruppen und der weiteren funktionellen Gruppen der Alkohole ≥ 2 ist.

Die erfindungsgemäßen wässrigen Dispersionen können auch in Wasser redispergierbare Polymerpulver überführt werden. Hierzu können die wässrigen Dispersionen, gegebenenfalls nach Zusatz von Schutzkolloiden als Trocknungshilfe, getrocknet werden, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt. Geeignete Trocknungshilfen sind beispielsweise die weiter oben genannten und bevorzugten Schutzkolloide.

Bei der Verdüsung hat sich vielfach ein Gehalt von bis zu 1,5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Polymerpulverzusammensetzungen sind beispielsweise Pigmente, Füllstoffe, Schaumstabilisatoren, Hydrophobierungsmittel.

Die erfindungsgemäßen in Wasser redispergierbaren Polymerpulver werden vorzugsweise in bauchemischen Beschichtungsmitteln in Verbindung mit hydraulisch abbindenden Bindemitteln, wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Dichtschlämmen, Fugenmörtel und Farben eingesetzt.

Erfindungsgemäße wässrige Dispersionen eignen sich beispielsweise zur Verwendung als oder in Klebemittel für die Verklebung unterschiedlicher Substrate, vorzugsweise von cellulosischen Materialien, wie Papier, Pappe, Holz oder Baumwolle, oder Kunststoffen, wie Polyethylen-, Polyvinylchlorid, Polyamid, Polyester-, Polystyrol oder Acrylnitril-Butadien-Styrol. Die Substrate können beispielsweise in Form von Fasern oder Folien vorliegen. Bevorzugt ist hierbei die Verwendung als Papierklebemittel, Verpackungsklebstoff, Holzklebstoff oder allgemein als Klebemittel für gewebte oder nichtgewebte Fasermaterialien. Am meisten bevorzugt ist der Einsatz der Polyvinylalkohol-stabilisierten Polymerisate in Holzleim. Die erfindungsgemäßen in Wasser redispergierbaren Polymerpulver können durch Redispergieren in Wasser wieder in erfindungsgemäße wässrige Dispersionen überführt werden und auch in den im vorhergehenden beschriebenen Verwendungen eingesetzt werden.

Die erfindungsgemäßen wässrigen Dispersionen zeigen eine überraschend hohe Lagerstabilität. Dies zeigt sich beispielsweise daran, dass die Viskosität der wässrigen Dispersionen während der Lagerung bei beispielsweise 20°C im Wesentlichen konstant bleibt, insbesondere nicht nennenswert zunimmt, vorzugsweise sogar ohne Aufrühren der wässerigen Dispersionen. Dies gilt sogar für den Fall, dass die Dispersionen weitere Additive oder Füllstoffe enthalten. Vorteilhaft ist hierbei auch, dass die wässrigen Dispersionen als Einkomponentensysteme vertrieben werden können und so direkt applizierbar sind, ohne dass der Endanwender aufwändig unterschiedliche Komponenten abmischen muss. All dies ist für den Anwender bei der Applikation von besonderem Vorteil.

Darüber hinaus führen die wässrigen Dispersionen nach ihrer Applikation als Adhäsive zu Klebeverbunden mit besonders hoher Wasserfestigkeit, insbesondere hoher Warmwasserfestigkeit, aber auch zu hoher Kaltwasserfestigkeit, selbst wenn die Klebeverbunde einer Zugbeanspruchung ausgesetzt sind.

Die Salze der (Erd)Alkali-Metalle und die di- oder polyfunktionellen Alkohole bewirken die vorteilhaften Effekte in synergistischer Weise. Der vorteilhafte Effekt der (Erd)Alkali-Metalle war auch insofern besonders überraschend, als dass ein Zusatz von anderen Salzen, wie Aluminiumchlorid, zu einem Eindicken der wässrigen Dispersionen führen kann und damit für die Lagerstabilität und Viskositätskonstanz kontraproduktiv sein kann. In besonderem Maße überraschte auch, dass die für gewöhnlich Wasser löslichen Salze der (Erd)Alkali-Metalle und die üblicherweise Wasser löslichen di- oder polyfunktionellen Alkohole in den erfindungsgemäßen wässrigen Dispersionen nach deren Applikation die Wasserfestigkeit des Klebeverbundes nicht nachteilig beeinflussen.

Die nachfolgenden Beispiele dienen der weiteren Erläuterung der Erfindung:

### Rohstoffe und allgemeine Angaben zu Reaktionsbedingungen:

Alle Rohstoffe waren kommerziell verfügbar und wurden ohne Vorbehandlung eingesetzt. Als "Wasser" wurde durch Ionenaustausch entsalztes Wasser eingesetzt.

Neben Vinylacetat (VAc) kamen folgende Monomere zum Einsatz: Ethylen (E); Versatic-9-säurevinylester (VeoVa®9, Momentive), N-Methylolacrylamid (NMA, 48 %ige wässerige Lösung), Acrylamid (AMD, 30 %ige wässerige Lösung).

Als Oxidationsmittel wurde Wasserstoffperoxid (H₉O₂) eingesetzt, als Reduktionsmittel in der Regel Weinsäure. Bei Copolymerisationen von Vinylacetat und Ethylen wurde als Reduktionsmittel Ascorbinsäure eingesetzt. Als weitere Substanz kam 2-Mercaptopropionsäure (MPS) zum Einsatz.

Als Schutzkolloid wurde die in Tabelle 1 näher beschriebene Polyvinylalkohol-Mischung eingesetzt. Die Polyvinylalkohole wurden in Form von wässrigen Lösungen eingesetzt. Zur Herstellung dieser wässrigen Lösungen von Polyvinylalkoholen mit einer Konzentration von 11 Gew.-% wurden die Polyvinylalkohole für mindestens 2 Stunden bei Temperaturen zwischen 90 und 95°C gelöst.

**Tabelle 1: Zusammensetzung der Polyvinylalkohol-Mischung (PVOH):**

| PVOH (Handelsname) | mittlerer Hydrolysegrad [Mol-%] | Viskosität^{a)} [mPas] | Anteil in der Mischung [%] |
|---|---|---|---|
| Kuraray POVAL® 10/98^{b)} | 98,6 | 10,0 | 10 |
| Kuraray POVAL® 6/98 ^{b)} | 98,4 | 6,0 | 5 |
| Exceval® RS2117 ^{c)} | 98,3 | 26,5 | 50 |
| Exceval® HR3010 ^{c)} | 99,2 | 15,0 | 35 |

| | | | |
|---|---|---|---|
| a) Höppler-Viskosität bestimmt nach DIN 53015 bei 20°C in 4 %-iger wässriger Lösung; b) Verseifungsprodukt eines Vinylacetat-Homopolymers; c) Verseifungsprodukt eines Vinylacetat-Ethylen-Copolymers. | | | |

Alle Drucklosreaktionen wurden in einem 3 L-Glasreaktor mit Rückflusskühler und Ankerrührer bei einer Rührergeschwindigkeit von 200 UpM durchgeführt. Die Copolymerisationen mit Ethylen wurden in einem 5 L-Druckreaktor für Arbeitsdrücke bis 85 bar, ausgerüstet mit elektronischer Temperaturmessung und -regelung, einem dreistufigen Paddelrührer, betrieben bei 400 UpM, einem Sicherheitsventil und fünf parallelen Dosiermöglichkeiten, durchgeführt.

Analysenwerte der erhaltenen Dispersionen sind in Tabelle 2 verzeichnet.

Die Herstellung von Klebstoffformulierungen erfolgte durch Abmischen von 100 g der jeweiligen auf 50 Gew.-% eingestellten Dispersion mit 5 Teilen AlCl₃-Lösung (50%ige wässrige Lösung). Die Formulierung wird jeweils als FX bezeichnet, wobei X die jeweilige Laufnummer des Beispiels bzw. Vergleichsbeispiels angibt. Vergleichsbeispiele sind als V-FX benannt.

### Methoden zur Charakterisierung von Dispersionen:

### Feststoffgehalt / Trocknungsrückstand (FG):

Zur Bestimmung des Feststoffgehaltes, in Gew.-% bezogen auf Dispersion, wurden nach Abschluss der Polymerisation etwa 0,3 g Polymerdispersion eingewogen und als dünner Film auf einer Aluminiumfolie für 30 Minuten bei 150°C im Umlufttrockenschrank getrocknet. Der Trocknungsrückstand wurde, nach Abkühlen im Exsikkator über Silikagel, zurückgewogen und der Festgehalt FG in Gew.-%, bezogen auf Dispersion, aus Rückstand und Einwaage berechnet.

### Viskosität (Bf20):

Die Viskosität der Dispersion wurde nach Temperierung auf 23°C mit einem Brookfield-Viskosimeter nach Gerätevorschrift bei 20 UPM, vermessen. Die dabei verwendeten Spindeln sind für die Beispiele bzw. Vergleichsbeispiele jeweils aufgeführt. Die Viskosität wird in mPas angegeben.

### Charakterisierung der Partikelgrößen:

Zur Ermittlung der Partikelgrößenverteilung mit dem Messgerät LS13320 der Firma Beckmann Coulter® Inc. nach Gerätevorschrift, unter Verwendung der Stoffkonstanten für Polyvinylacetat, mit dem optischen Modell PVAC.RF780D, wurde die Dispersion mit Wasser verdünnt. Koagulat (KOA) und grobpartikuläre Anteile (SR), deren Bestimmung im Punkt 1.4 beschrieben wird, wurden zuvor mittels 40 µm Siebgewebe abgetrennt. Zur Herstellung der Messverdünnungen, wurde zunächst unter Rühren tropfenweise Wasser zu den konzentrierten Dispersionen hinzugefügt und auf Konzentrationen von 10 bis 25 Gew.-% Festgehalt verdünnt. Diese verdünnten Dispersionen wurden zur Herstellung der Messlösungen hinreichender Verdünnung benutzt. Wird hingegen konzentrierte Dispersion zu einer größeren Menge Wasser gegeben, um die Messlösungen hinreichender Verdünnung herzustellen, so kommt es insbesondere für höher viskose Dispersionen mit Viskositäten beispielsweise > 5.000 mPas zu einer unzureichenden Teilchenvereinzelung in der Messlösung und zu einer Verfälschung des Analysenergebnisses.

Zur quantitativen Charakterisierung der Dispersität oder Partikelgröße wurden der gewichtsmittlere Partikeldurchmesser Dw, der zahlenmittlere Partikeldurchmesser Dn und der Zentralwert, auch als Medianwert bekannt, der Volumenverteilung, D3,50, die als Analysenergebnisse der Messungen mit dem LS13320 ausgewiesenen Werte herangezogen.

Die Polydispersität PD wird als Verhältnis von gewichtsmittlerem zu zahlenmittlerem Partikeldurchmesser definiert: PD = Dw/Dn.

Als Analysenergebnisse werden durch die Software des LS13320 auch grafische Darstellungen der Partikelanteile über der Partikelgröße, beispielsweise als Volumenhäufigkeitsverteilung (Volumenanteile; Vol.-%) über dem Partikeldurchmesser anschaulich geliefert oder in Form von tabellarischen Daten zur Verfügung gestellt. Bekanntermaßen können mit anderen Geräten oder Messmethoden erzielte Ergebnisse von den hier angegebenen, mit dem Beckmann-Coulter LS13320 ermittelten Ergebnissen abweichen.

### Mindestfilmbildungstemperatur (MFT):

Die Bestimmung der Mindestfilmbildungstemperatur (MFT) erfolgt entsprechend der DIN ISO 2115 mit dem Gerät MFT II 50-030 der Firma Coesfeld. Die MFT-Bank verfügt über einen kalibrierten Temperaturgradienten von 0°C bis 20°C. Die Mindestfilmbildungstemperatur MFT kann mit einer Genauigkeit von +/- 1 K bestimmt werden. Zur Herstellung einer entsprechenden Messprobe wird die jeweilige Dispersion wie üblich mittels 200 µm Rakel in Form eines Films auf eine Aluminiumfolie aufgezogen, der direkt auf der MFT-Bank appliziert wird. Die Trocknung des Dispersionsfilms erfolgt während 90 Minuten, wobei kontinuierlich ein schwacher trockener Luftstrom über die Probe geleitet wird.

### Viskositätsstabilität bei Lagerung:

200 g der jeweiligen Klebstoffformulierung (6 Austestungen pro Beispieldispersion) wurden entweder bei Raumtemperatur (RT), bei 5°C oder bei 40°C gelagert. Bei RT erfolgte die Lagerung für 60 Tage, bei 5°C für 30 Tage, bei 40°C für 30 Tage. Nach der Lagerung wurden die Proben auf 23°C temperiert und bezüglich ihrer Fließfähigkeit optisch nach folgendem Schema beurteilt:
Bewertung Fließfähigkeit: Note (1 bis 5):
1: fließt einwandfrei, keine Strukturbildung erkennbar,
2: fließt, Andeutungen von Strukturbildung / Verdickungen,
3: fließt aber Strukturbildung / Verdickungen deutlich,
4: steht, fließt allenfalls extrem langsam, deutliche Strukturbildung / Verdickung,
5: steht, völlig eingedickt / vergelt / fest.
Für praktische Anwendungen, insbesondere bei Lagerung der Klebstoffformulierungen ohne Rühren, sind Fließfähigkeiten mit Note 1 oder 2 notwendig.

Nach Beurteilung der Fließfähigkeit wurde die Brookfield-Viskosität (Bf20) der jeweiligen Probe bestimmt. Hierbei erfolgte die Viskositätsmessung zum einen an Hand einer ungerührten Probe (Viskosität Bf20 ng (nicht gerührt)) und zum anderen an Hand einer mit einem Spatel von Hand aufgerührten Probe (Viskosität Bf20 g (gerührt)).

Die gemessenen Viskositäten wurden mit der Startviskosität Bf20 vor Lagerung verglichen. Für praktische Anwendungen werden Quotienten Bf20 ng / Bf20 und Bf20 g / Bf20 von ≤ 2 bevorzugt.

### Prüfung der Wasserfestigkeit entsprechend DIN EN 204/205:

Die Herstellung der Prüfkörper und Prüfung der Wasserfestigkeit erfolgte gemäß DIN EN 205:2003-06. Hierfür wurden Buchenholzplatten mit der Klebstoff-Formulierung verklebt und die Zugfestigkeit nach entsprechender Konditionierung der Prüfkörper bestimmt.

Der Klebstoffauftrag erfolgte beidseitig mit 250 g/cm². Nach dem Auftrag wurden die Buchenholzplatten sofort zusammengefügt und vier Minuten ohne Druck im Normklima [23/50] gelagert. Danach wurden die Platten 2 Stunden mit einem konstanten Druck von 7,5 kg/cm² verpresst, wobei der Druck gleichmäßig über die gesamte Fläche verteilt war.

Nach eintägiger Lagerung im Normklima [23/50] erfolgte der Zuschnitt der Prüfkörper aus den verklebten Buchenplatten gemäß oben zitierter DIN EN 205.

Die Prüfkörper wurden vor der Prüfung gemäß den Vorgaben nach DIN EN 204:2001-09 konditioniert. Die Bestimmung der Kaltwasserfestigkeit gemäß Belastungsgruppe D3 erfolgte nach D3/3 und die Bestimmung der Heißwasserfestigkeit gemäß Belastungsgruppe D4 nach D4/5.

Für die Prüfungen wurde eine Zugschermaschine mit konstantem Vorschub von 50 mm/min verwendet.

Die entsprechenden Belastungsgruppen sind vorzugsweise erfüllt, wenn die nach DIN EN 205:2003-06 bestimmte mittlere Zugfestigkeit die in DIN EN 204:2001-09, Tabelle 2 angegebenen Mindestwerte erreicht.

### Prüfung der Wärmefestigkeit (WATT 91) entsprechend DIN EN 14257:

Die Herstellung der Prüfkörper erfolgte auf dieselbe Weise wie unter Abschnitt "Prüfung der Wasserfestigkeit entsprechend DIN EN 204/205" beschrieben.

Die Prüfkörper wurden vor der Prüfung gemäß den Vorgaben nach DIN EN 14257:2006-09 konditioniert und entsprechend den dort beschriebenen Vorgaben die Zugfestigkeit bestimmt. Für die Prüfungen wurde eine Zugschermaschine mit konstantem Vorschub von 50 mm/min verwendet.

### Vergleichsbeispiel 1 (X = 1; VBsp. V1):

Es wurden 825 g der in Tabelle 1 verzeichneten Mischung vollverseifter Polyvinylalkohole, 8,7 g einer 20 Gew.-%igen wässrigen Weinsäure-Lösung, 51 g Vinylacetat und 237 g Wasser im Reaktor vorgelegt. Bei einer Solltemperatur von 50°C wurde die Dosierung 1, die aus einer 2%igen wässrigen WasserstoffperoxidLösung bestand, gestartet und mit einer Dosierrate von 20,9 ml/h in 225 min zugegeben. Die Dosierung 2 bestand aus 1064 g eines Gemisches aus VAc und VeoVa®9 im Gewichtsverhältnis 1,0 : 0,18 und wurde 5 min nach dem Start der Dosierung 1 in 150 min vollständig dosiert. Gleichzeitig mit der Dosierung 2 lief eine Dosierung 3, bestehend aus 8,3 g NMA, 34 g AMD, 0,05 g MPS und 101 g Wasser. Während der Dosierung 2 wurde die Reaktionstemperatur auf 83°C erhöht. Nach Beendigung der Dosierung 1 wurden 9,5 g einer 10 Gew.-%igen wässrigen tert-Butylhydroperoxid-Lösung und 9,5 g einer 10 Gew.-%igen wässrigen Ascorbinsäure-Lösung zudosiert, und es wurde für weitere 10 Minuten auspolymerisiert.

### Vergleichsbeispiel 2 (VBsp. V2):

Es wurde wie in Beispiel 1 verfahren, mit dem Unterschied, dass 7,1 g Lithiumchlorid mit in die Vorlage gegeben wurden.

### Vergleichsbeispiel 3 (VBsp. V3):

Es wurde wie in Beispiel 1 verfahren. Jedoch wurde die erhaltene Dispersion vor dem Abkühlen mit 96 g 1,6-Hexandiol vermengt.

### Vergleichsbeispiel 4 (VBsp. V4):

Es wurde wie in Beispiel 2 verfahren, jedoch wurde die erhaltene Dispersion vor dem Abkühlen mit einer Emulsion von 48 g Propylencarbonat in 24 g einer 10 %igen wässerigen Polyvinylalkohol-Lösung (Verseifungszahl und Höppler-Viskosität des Polyvinylalkohols: 140 mg/(KOH)/g und 4 mPas) vermengt.

### Beispiel 5 (Bsp. 5):

Es wurde wie in Beispiel 2 verfahren, mit dem Unterschied, dass die erhaltene Dispersion vor dem Abkühlen mit 96 g 1,6-Hexandiol vermengt wurde.

### Beispiel 6 (Bsp. 6):

Es wurde wie in Beispiel 5 verfahren, allerdings betrugen die Einsatzmengen 3,55 g Lithiumchlorid und 48 g 1,6-Hexandiol.

### Beispiel 7 (Bsp. 7):

Es wurde wie in Beispiel 5 verfahren, allerdings betrugen die Einsatzmengen 7,1 g Lithiumchlorid und 144 g 1,6-Hexandiol und das Lithiumchlorid wurde nicht zur Vorlage gegeben, sondern die Zugabe erfolgte zusammen mit dem 1,6-Hexandiol.

**Tabelle 2: Daten der Dispersionen der (Vergleichs)Beispiele:**

| (V) Bsp. | FG [Gew.-%] | Brookfield-Viskosität [mPa*s] | Partikelgrößenverteilung Dw [µm] | PD = Dw / Dn |
|---|---|---|---|---|
| V1 | 50,9 | 24000 | 2,6 | 7,9 |
| V2 | 51,1 | 25500 | 2,4 | 4,7 |
| V3 | 52,0 | 29250 | 2,5 | 6,3 |
| V4 | 51,1 | 26900 | 2,3 | 5,4 |
| 5 | 52,3 | 32100 | 2,0 | 4,9 |
| 6 | 51,4 | 27400 | 2,2 | 5,7 |
| 7 | 52,8 | 33100 | 2,1 | 6,6 |
| 8 | 52,3 | 3100 | 0,6 | 1,1 |
| 9 | 51,0 | 25200 | 1,6 | 4,5 |

Spalte 2: Experimentell bestimmter Festgehalt FG der Dispersion in Gew.-%;
Spalte 3: Viskosität Bf20 in mPas, gemessen mit Spindel 6, bei 20 UpM;
Spalte 4: gewichtsmittlere Partikelgröße Dw der Volumenverteilung des Partikeldurchmessers;
Spalte 5: Polydispersität PD = Dw / Dn.

### Beispiel 8 (Bsp. 8):

Es wurde wie in Beispiel 2 verfahren, mit dem Unterschied, dass 96 g 1,6-Hexandiol mit zur Vorlage gegeben wurden.

### Beispiel 9 (Bsp. 9):

Es wurden 1518 g der in Tabelle 1 verzeichneten Mischung vollverseifter Polyvinylalkohole, 27,6 g einer 20 Gew.-%igen wässrigen Ascorbinsäure-Lösung, 4 g Natriumascorbat, 15,4 g LiCl, 828 g Vinylacetat und 321 g Wasser im Reaktor vorgelegt, 180 g Ethylen aufgedrückt und auf Solltemperatur von 85°C temperiert. Bei Solltemperatur und einem Ethylendruck von 37 bar wurde die Dosierung 1, die aus einer 2%-igen wässerigen Wasserstoffperoxid-Lösung bestand, gestartet und mit einer Dosierrate von 66,0 ml/h in 225 min zugegeben. 5 Minuten nach Start der Dosierung 1 wurde die Dosierung 2, bestehend aus 414 g Vinylacetat und 288 g VeoVa®9 über einen Zeitraum von 150 min vollständig mit konstanter Rate dosiert. Gleichzeitig mit der Dosierung 2 lief eine Dosierung 3, bestehend aus 12,1 g NMA, 51,3 g AMD und 0,05 g MPS. Während des Dosierzeitraums der Dosierungen 2 und 3 wurden bei einem konstanten Vorgabedruck von 35 bar insgesamt noch 180 g Ethylen zudosiert. Nach Beendigung der Dosierung 1 wurden 30,6 g einer 10 Gew.-%igen wässrigen tert-Butylhydroperoxid-Lösung und 30,6 g einer 10 Gew.-%igen wässrigen Ascorbinsäure-Lösung zudosiert, und es wurde für weitere 10 Minuten auspolymerisiert. Vor dem Abkühlen auf Raumtemperatur wurde die Dispersion mit 68,4 g 1,6-Hexandiol vermengt.

**Tabelle 3: Anwendungstechnische Daten der Klebstoffformulierungen und der Holzklebeverbünde:**

| | MFT [°C] | Bf20 [mPas] | Festigkeitswerte (ungelagert) | | | Festigkeitswerte (gelagert) | | | Fließfähigkeit | | | Bf20 ng / Bf20 | | | Bf20 g / Bf20 | | |
|---|---|---|---|---|---|---|---|---|---|---|---|---|---|---|---|---|---|
| | | | D3/3 [N/mm²] | D4/5 [N/mm²] | WATT 91 [N/mm²] | D3/3 [N/mm²] | D4/5 [N/mm²] | WATT 91 [N/mm²] | RT | 5°C | 40°C | RT | 5°C | 40°C | RT | 5° C | 40°C |
| V-F1 | 20 | 8917 | > 4,0 | 4,1 | 8,3 | > 4,0 | 4,0 | 8,4 | 4 | 5 | 4 | 4,13 | 6,31 | 4,03 | 2,47 | 2,48 | 2,24 |
| V-F2 | 20 | 8869 | > 4,0 | 4,2 | 8,5 | > 4,0 | 4,0 | 8,2 | 3 | 4 | 4 | 3,62 | 3,94 | 3,33 | 2,17 | 2,32 | 2,20 |
| V-F3 | 11 | 7559 | > 4,0 | 4,3 | 7,2 | > 4,0 | 4,3 | 7,1 | 3 | 3 | 3 | 2,55 | 2,67 | 2,41 | 2,12 | 2,42 | 2,35 |
| V-F4 | 8 | 9356 | > 4,0 | 3,7 | 7,0 | > 4,0 | 3,6 | 6,8 | 3 | 4 | 4 | 3,58 | 3,82 | 3,35 | 2,21 | 2,57 | 2,10 |
| F5 | 11 | 7514 | > 4,0 | 4,4 | 7,6 | > 4,0 | 4,4 | 7,6 | 2 | 2 | 1 | 1,60 | 1,98 | 1,20 | 1,05 | 1,81 | 1,04 |
| F6 | 13 | 8631 | > 4,0 | 4,4 | 7,7 | > 4,0 | 4,5 | 7,3 | 2 | 2 | 2 | 1,65 | 2,21 | 1,49 | 1,09 | 1,90 | 1,21 |
| F7 | 9 | 6569 | > 4,0 | 4,1 | 7,0 | > 4,0 | 4,0 | 7,0 | 2 | 2 | 2 | 1,56 | 1,74 | 1,22 | 1,02 | 1,54 | 1,00 |
| F8 | 10 | 726 | > 4,0 | 2,9 | 5,0 | > 4,0 | 2,8 | 5,0 | 1 | 1 | 1 | 1,37 | 1,63 | 1,19 | 1,05 | 1,34 | 1,00 |
| F9 | < 0 | 9058 | > 4,0 | 3,8 | 4,2 | > 4,0 | 3,8 | 4,0 | 2 | 2 | 2 | 1,48 | 1,99 | 1,34 | 1,09 | 1,58 | 1,08 |

Spalte 1: Bezeichnung der Klebstoffformulierung FX bzw. V-FX, wobei X die jeweilige Laufnummer des Beispiels bzw. Vergleichsbeispiels ist;
Spalte 2: Mindestfilmbildungstemperatur (MFT) der Klebstoffformulierung;
Spalte 3: Viskosität Bf20 der Klebstoffformulierung mit einem Feststoffgehalt von 50 Gew.-%, gemessen mit Spindel 6;
Spalten 4, 5, 6: D3/3, D4/5 und WATT 91 Werte für Holzklebeverbünde, die unter Einsatz ungelagerter Klebstoffformulierung hergestellt wurden;
Spalte 7, 8, 9: D3/3, D4/5 und WATT 91 Werte für Holzklebeverbünde, die unter Einsatz der für 30 Tage bei 40°C gelagerten Klebstoffformulierung hergestellt wurden;
Spalten 10, 11, 12: Beurteilung der Fließfähigkeit der Klebstoffformulierung nach Lagerung bei RT (Raumtemperatur), 5°C sowie 40°C;
Spalten 13, 14, 15: Relative Viskositätszunahme der nach Lagerung ungerührten Klebstoffformulierungen;
Spalten 16, 17, 18: Relative Viskositätszunahme der nach Lagerung gerührten Klebstoffformulierungen.

## Patentansprüche

1. Wässrige Dispersionen auf Basis Schutzkolloid stabilisierter Polymerisate von ethylenisch ungesättigten Monomeren, **dadurch gekennzeichnet, dass**
ein oder mehrere Salze von (Erd)Alkali-Metallen sowie ein oder mehrere Alkohole enthalten sind, die mindestens eine Alkohol-Gruppe und gegebenenfalls eine oder mehrere weitere funktionelle Gruppen tragen ausgewählt aus der Gruppe umfassend Amin-, Carbaminsäure-, Mercaptan-, Sulfonsäure-, Schwefelsäure-, Halogenid-, Carb oxyl-, Alkoxy-, Phosphinsäure-, Phosphonsäure- und Phosphorsäure-Gruppen,
wobei die Summe aus der Anzahl der Alkohol-Gruppen und der weiteren funktionellen Gruppen der Alkohole ≥ 2 ist, und wobei die Schutzkolloide ein oder mehrere vollverseifte Polyvinylalkohole mit einem Hydrolysegrad von ≥ 90 Mol-% umfassen.

2. Wässrige Dispersionen auf Basis Schutzkolloid stabilisierter Polymerisate von ethylenisch ungesättigten Monomeren nach Anspruch 1, **dadurch gekennzeichnet, dass** ein oder mehrere Salze von (Erd)Alkali-Metallen ausgewählt werden aus der Gruppe umfassend (Erd)Alkali-Halogenide, (Erd)Alkali-Acetate, (Erd)Alkali-Triflate und (Erd)Alkali-Sulfate.

3. Wässrige Dispersionen auf Basis Schutzkolloid stabilisierter Polymerisate von ethylenisch ungesättigten Monomeren nach Anspruch 1 oder 2, **dadurch gekennzeichnet, dass** die wässrigen Dispersionen 0,05 bis 3 Gew.-% an Salzen von (Erd)Alkali-Metallen enthalten, bezogen auf das Gesamtgewicht der Polymerisate auf Basis ethylenisch ungesättigter Monomere.

4. Wässrige Dispersionen auf Basis Schutzkolloid stabilisierter Polymerisate von ethylenisch ungesättigten Monomeren nach Anspruch 1 bis 3, **dadurch gekennzeichnet, dass** ein oder mehrere Alkohole 2 bis 15 Kohlenstoffatome enthalten.

5. Wässrige Dispersionen auf Basis Schutzkolloid stabilisierter Polymerisate von ethylenisch ungesättigten Monomeren nach Anspruch 1 bis 4, **dadurch gekennzeichnet, dass** die Summe aus der Anzahl der Alkohol-Gruppen und der weiteren funktionellen Gruppen der Alkohole 2 bis 15 ist.

6. Wässrige Dispersionen auf Basis Schutzkolloid stabilisierter Polymerisate von ethylenisch ungesättigten Monomeren nach Anspruch 1 bis 5, **dadurch gekennzeichnet, dass** die Alkohole zwei Alkohol-Gruppen enthalten.

7. Wässrige Dispersionen auf Basis Schutzkolloid stabilisierter Polymerisate von ethylenisch ungesättigten Monomeren nach Anspruch 1 bis 5, **dadurch gekennzeichnet, dass** ein oder mehrere Alkohole ausgewählt werden aus der Gruppe umfassend Ketosen, Aldosen, Cyclodextrine, Alditole, Sorbitol, Thritol, Erithritol, Arabit, Pentaerythritol, Trimethylolpropan, Triethanolpropan, Glycerin, Hydroxyalkanolamine und Diole.

8. Wässrige Dispersionen auf Basis Schutzkolloid stabilisierter Polymerisate von ethylenisch ungesättigten Monomeren nach Anspruch 1 bis 7, **dadurch gekennzeichnet, dass** die wässrigen Dispersionen die Alkohole zu 0,1 bis 15 Gew.-% enthalten, bezogen auf das Gesamtgewicht der Polymerisate auf Basis ethylenisch ungesättigter Monomere.

9. Wässrige Dispersionen auf Basis Schutzkolloid stabilisierter Polymerisate von ethylenisch ungesättigten Monomeren nach Anspruch 1 bis 8, **dadurch gekennzeichnet, dass** die Schutzkolloide ein oder mehrere vollverseifte Polyvinylalkohole mit einem Hydrolysegrad von ≥ 95 Mol-% umfassen.

10. Verfahren zur Herstellung der wässrigen Dispersionen auf Basis Schutzkolloid stabilisierter Polymerisate von ethylenisch ungesättigten Monomeren aus Anspruch 1 bis 9,
**dadurch gekennzeichnet, dass** ein oder mehrere Salze von (Erd)Alkali-Metallen sowie ein oder mehrere Alkohole eingesetzt werden, die mindestens eine Alkohol-Gruppe und gegebenenfalls eine oder mehrere weitere funktionelle Gruppen tragen ausgewählt aus der Gruppe umfassend Amin-, Carbaminsäure-, Mercaptan-, Sulfonsäure-, Schwefelsäure-, Halogenid-, Carboxyl-, Alkoxy-, Phosphinsäure-, Phosphonsäure- und Phosphorsäure-Gruppen,
wobei die Summe aus der Anzahl der Alkohol-Gruppen und der weiteren funktionellen Gruppen der Alkohole ≥ 2 ist.

11. Klebstoffformulierungen enthaltend eine oder mehrere wässrige Dispersionen aus Anspruch 1 bis 9,
0 bis 10 Gew.-Teile an einem oder mehreren Filmbildehilfsmitteln und/oder
0,05 bis 5 Gew.-Teile an einem oder mehreren Katalysatoren und/oder
0 bis 6 Gew.-Teile an einem oder mehreren zusätzlichen Schutzkolloiden und/oder
gegebenenfalls 0 bis 10 Gew.-Teile Harnstoff, gegebenenfalls ein oder mehrere Füllstoffe aus der Gruppe umfassend Kalk und Kreide,
wobei sich die Angaben in Gew.-Teilen (Gewichtsteilen) auf 100 Gewichtsteile der wässrigen Dispersionen aus Anspruch 1 bis 9 beziehen.

12. In Wasser redispergierbare Pulver auf Basis Schutzkolloid stabilisierter Polymerisate von ethylenisch ungesättigten Monomeren, **dadurch gekennzeichnet, dass**
ein oder mehrere Salze von (Erd)Alkali-Metallen sowie ein oder mehrere Alkohole enthalten sind, die mindestens eine Alkohol-Gruppe und gegebenenfalls eine oder mehrere weitere funktionelle Gruppen tragen ausgewählt aus der Gruppe umfassend Amin-, Carbaminsäure-, Mercaptan-, Sulfonsäure-, Schwefelsäure-, Halogenid-, Carboxyl-, Alkoxy-, Phosphinsäure-, Phosphonsäure- und Phosphorsäure-Gruppen,
wobei die Summe aus der Anzahl der Alkohol-Gruppen und der weiteren funktionellen Gruppen der Alkohole ≥ 2 ist.

13. Verwendung der wässrigen Dispersionen aus Anspruch 1 bis 9 oder der in Wasser redispergierbaren Pulver aus Anspruch 12 als oder in Klebemittel für die Verklebung unterschiedlicher Substrate, insbesondere von cellulosischen Materialien, wie Papier, Pappe, Holz oder Baumwolle, oder Kunststoffen, wie Polyethylen-, Polyvinylchlorid, Polyamid, Polyester-, Polystyrol oder Acrylnitril-Butadien-Styrol.

## Claims

1. Aqueous dispersions based on protective colloid-stabilized polymers of ethylenically unsaturated monomers, **characterized in that**
one or more salts of alkali(ne earth) metals and also one or more alcohols are included which carry at least one alcohol group and optionally one or more further functional groups selected from the group encompassing amine groups, carbamic acid groups, mercaptan groups, sulfonic acid groups, sulfuric acid groups, halide groups, carboxyl groups, alkoxy groups, phosphinic acid groups, phosphonic acid groups, and phosphoric acid groups,
where the sum of the number of the alcohol groups and of the further functional groups of the alcohols is ≥ 2, and where the protective colloids comprise one or more fully hydrolyzed polyvinyl alcohols having a degree of hydrolysis of ≥ 90 mol%.

2. Aqueous dispersions based on protective colloid-stabilized polymers of ethylenically unsaturated monomers according to Claim 1, **characterized in that** one or more salts of alkali(ne earth) metals are selected from the group encompassing alkali(ne earth) metal halides, alkali(ne earth) metal acetates, alkali(ne earth) metal triflates, and alkali(ne earth) metal sulfates.

3. Aqueous dispersions based on protective colloid-stabilized polymers of ethylenically unsaturated monomers according to Claim 1 or 2, **characterized in that** the aqueous dispersion comprises 0.05 to 3 wt% of salts of alkali(ne earth) metals, based on the total weight of the polymers based on ethylenically unsaturated monomers.

4. Aqueous dispersions based on protective colloid-stabilized polymers of ethylenically unsaturated monomers according to Claim 1 to 3, **characterized in that** one or more alcohols comprise 2 to 15 carbon atoms.

5. Aqueous dispersions based on protective colloid-stabilized polymers of ethylenically unsaturated monomers according to Claim 1 to 4, **characterized in that** the sum of the number of the alcohol groups and of the further functional groups of the alcohols is 2 to 15.

6. Aqueous dispersions based on protective colloid-stabilized polymers of ethylenically unsaturated monomers according to Claim 1 to 5, **characterized in that** the alcohols comprise two alcohol groups.

7. Aqueous dispersions based on protective colloid-stabilized polymers of ethylenically unsaturated monomers according to Claim 1 to 5, **characterized in that** one or more alcohols are selected from the group encompassing ketoses, aldoses, cyclodex-trins, alditols, sorbitol, thritol, erythritol, arabitol, pentaerythritol, trimethylolpropane, triethanolpropane, glycerol, hydroxyalkanolamines, and diols.

8. Aqueous dispersions based on protective colloid-stabilized polymers of ethylenically unsaturated monomers according to Claim 1 to 7, **characterized in that** the aqueous dispersion comprises the alcohols at 0.1 to 15 wt%, based on the total weight of the polymers based on ethylenically unsaturated monomers.

9. Aqueous dispersions based on protective colloid-stabilized polymers of ethylenically unsaturated monomers according to Claim 1 to 8, **characterized in that** the protective colloids comprise one or more fully hydrolyzed polyvinyl alcohols having a degree of hydrolysis of ≥ 95 mol%.

10. Method for producing the aqueous dispersions based on protective colloid-stabilized polymers of ethylenically unsaturated monomers from Claim 1 to 9, **characterized in that** one or more salts of alkali (ne earth) metals and also one or more alcohols are used which carry at least one alcohol group and optionally one or more further functional groups selected from the group encompassing amine groups, carbamic acid groups, mercaptan groups, sulfonic acid groups, sulfuric acid groups, halide groups, carboxyl groups, alkoxy groups, phosphinic acid groups, phosphonic acid groups, and phosphoric acid groups, where the sum of the number of the alcohol groups and of the further functional groups of the alcohols is ≥ 2.

11. Adhesive formulations comprising one or more than one aqueous dispersion from Claim 1 to 9,
0 to 10 parts by weight of one or more film-forming assistants and/or
0.05 to 5 parts by weight of one or more catalysts and/or
0 to 6 parts by weight of one or more additional protective colloids and/or
optionally 0 to 10 parts by weight of urea, optionally one or more fillers from the group encompassing lime and chalk,
where the figures in parts by weight are based on 100 parts by weight of the aqueous dispersions from Claim 1 to 9.

12. Water-redispersible powders based on protective colloid-stabilized polymers of ethylenically unsaturated monomers, **characterized in that** one or more salts of alkali(ne earth) metals and also one or more alcohols are included which carry at least one alcohol group and optionally one or more further functional groups selected from the group encompassing amine groups, carbamic acid groups, mercaptan groups, sulfonic acid groups, sulfuric acid groups, halide groups, carboxyl groups, alkoxy groups, phosphinic acid groups, phosphonic acid groups, and phosphoric acid groups, where the sum of the number of the alcohol groups and of the further functional groups of the alcohols is ≥ 2.

13. Use of the aqueous dispersions from Claim 1 to 9 or of the water-redispersible powders from Claim 12 as or in bonding compositions for the adhesive bonding of different substrates, more particularly of cellulosic materials, such as paper, cardboard, wood or cotton, or plastics, such as polyethylene, polyvinyl chloride, polyamide, polyester, polystyrene or acrylonitrile-butadiene-styrene.

## Revendications

1. Dispersions aqueuses à base de polymères de monomères éthyléniquement insaturés stabilisés par des colloïdes protecteurs, **caractérisées en ce que** un ou plusieurs sels de métaux alcalins (-terreux), ainsi qu'un ou plusieurs alcools sont contenus, qui portent au moins un groupe alcool et éventuellement un ou plusieurs groupes fonctionnels supplémentaires choisis dans le groupe comprenant les groupes amine, acide carbamique, mercaptan, acide sulfonique, acide sulfurique, halogénure, carboxyle, alcoxy, acide phosphinique, acide phosphonique et acide phosphorique,
la somme du nombre des groupes alcool et des groupes fonctionnels supplémentaires des alcools étant ≥ 2, et les colloïdes protecteurs comprenant un ou plusieurs alcools polyvinyliques entièrement saponifiés ayant un degré d'hydrolyse ≥ 90 % en moles.

2. Dispersions aqueuses à base de polymères de monomères éthyléniquement insaturés stabilisés par des colloïdes protecteurs selon la revendication 1, **caractérisées en ce qu'**un ou plusieurs sels de métaux alcalins (-terreux) sont choisis dans le groupe comprenant les halogénures alcalins (-terreux), les acétates alcalins (-terreux), les triflates alcalins (-terreux) et les sulfates alcalins (-terreux).

3. Dispersions aqueuses à base de polymères de monomères éthyléniquement insaturés stabilisés par des colloïdes protecteurs selon la revendication 1 ou 2, **caractérisées en ce que** les dispersions aqueuses contiennent 0,05 à 3 % en poids de sels de métaux alcalins (-terreux), par rapport au poids total des polymères à base de monomères éthyléniquement insaturés.

4. Dispersions aqueuses à base de polymères de monomères éthyléniquement insaturés stabilisés par des colloïdes protecteurs selon les revendications 1 à 3, **caractérisées en ce qu'**un ou plusieurs alcools contiennent 2 à 15 atomes de carbone.

5. Dispersions aqueuses à base de polymères de monomères éthyléniquement insaturés stabilisés par des colloïdes protecteurs selon les revendications 1 à 4, **caractérisées en ce que** la somme du nombre des groupes alcools et des groupes fonctionnels supplémentaires des alcools est de 2 à 15.

6. Dispersions aqueuses à base de polymères de monomères éthyléniquement insaturés stabilisés par des colloïdes protecteurs selon les revendications 1 à 5, **caractérisées en ce que** les alcools contiennent deux groupes alcool.

7. Dispersions aqueuses à base de polymères de monomères éthyléniquement insaturés stabilisés par des colloïdes protecteurs selon les revendications 1 à 5, **caractérisées en ce qu'**un ou plusieurs alcools sont choisis dans le groupe comprenant les cétoses, les aldoses, les cyclodextrines, les alditols, le sorbitol, le thritol, l'érythritol, l'arabitol, le pentaérythritol, le triméthylolpropane, le triéthanolpropane, la glycérine, les hydroxyalcanolamines et les diols.

8. Dispersions aqueuses à base de polymères de monomères éthyléniquement insaturés stabilisés par des colloïdes protecteurs selon les revendications 1 à 7, **caractérisées en ce que** les dispersions aqueuses contiennent les alcools à hauteur de 0,1 à 15 % en poids, par rapport au poids total des polymères à base de monomères éthyléniquement insaturés.

9. Dispersions aqueuses à base de polymères de monomères éthyléniquement insaturés stabilisés par des colloïdes protecteurs selon les revendications 1 à 8, **caractérisées en ce que** les colloïdes protecteurs comprennent un ou plusieurs alcools polyvinyliques entièrement saponifiés ayant un degré d'hydrolyse ≥ 95 % en moles.

10. Procédé de fabrication des dispersions aqueuses à base de polymères de monomères éthyléniquement insaturés stabilisés par des colloïdes protecteurs selon les revendications 1 à 9, **caractérisé en ce qu'**un ou plusieurs sels de métaux alcalins (-terreux), ainsi qu'un ou plusieurs alcools sont utilisés, qui portent au moins un groupe alcool et éventuellement un ou plusieurs groupes fonctionnels supplémentaires choisis dans le groupe comprenant les groupes amine, acide carbamique, mercaptan, acide sulfonique, acide sulfurique, halogénure, carboxyle, alcoxy, acide phosphinique, acide phosphonique et acide phosphorique,
la somme du nombre des groupes alcool et des groupes fonctionnels supplémentaires des alcools étant ≥ 2.

11. Formulations d'adhésifs contenant une ou plusieurs dispersions aqueuses selon les revendications 1 à 9,
0 à 10 parties en poids d'un ou de plusieurs adjuvants filmogènes et/ou
0,05 à 5 parties en poids d'un ou de plusieurs catalyseurs et/ou
0 à 6 parties en poids d'un ou de plusieurs colloïdes protecteurs supplémentaires et/ou
éventuellement 0 à 10 parties en poids d'urée,
éventuellement une ou plusieurs charges du groupe comprenant la chaux et la craie,
les indications en parties en poids se rapportant à 100 parties en poids des dispersions aqueuses selon les revendications 1 à 9.

12. Poudres redispersibles dans de l'eau à base de polymères de monomères éthyléniquement insaturés stabilisés par des colloïdes protecteurs, **caractérisées en ce qu'**un ou plusieurs sels de métaux alcalins (-terreux), ainsi qu'un ou plusieurs alcools sont contenus, qui portent au moins un groupe alcool et éventuellement un ou plusieurs groupes fonctionnels supplémentaires choisis dans le groupe comprenant les groupes amine, acide carbamique, mercaptan, acide sulfonique, acide sulfurique, halogénure, carboxyle, alcoxy, acide phosphinique, acide phosphonique et acide phosphorique, la somme du nombre des groupes alcool et des groupes fonctionnels supplémentaires des alcools étant ≥ 2.

13. Utilisation des dispersions aqueuses selon les revendications 1 à 9 ou des poudres redispersibles dans de l'eau selon la revendication 12 en tant que ou dans des agents adhésifs pour le collage de différents substrats, notamment de matériaux cellulosiques tels que le papier, le carton, le bois ou le coton, ou de matières plastiques, telles que le polyéthylène, le polychlorure de vinyle, le polyamide, le polyester, le polystyrène ou l'acrylonitrile-butadiène-styrène.
